# EUROPÄISCHE PATENTSCHRIFT

(11) **EP 1 852 290 B1**
(45) Veröffentlichungstag und Bekanntmachung des Hinweises auf die Patenterteilung: **22.06.2011**
(21) Anmeldenummer: 07008462.9
(22) Anmeldetag: 26.04.2007
(51) Int. Cl.: B60J 7/12, B60J 7/14

(54) **Bewegliches Dachteil in einem Fahrzeugdach**
Moveable roof part in the roof of a vehicle
Partie de toit mobile dans un toit de véhicule

(30) Priorität: 03.05.2006 DE 102006020759
(43) Veröffentlichungstag der Anmeldung: 07.11.2007
(73) Patentinhaber: Magna Car Top Systems GmbH, 74321 Bietigheim-Bissingen (DE)
(72) Erfinder: Bruder, Gernot, Dr.-Ing., 76131 Karlsruhe (DE)

(56) Entgegenhaltungen:
- EP-A- 1 389 550
- WO-A-03/047896
- WO-A-2006/021325
- DE-A1- 10 205 227
- DE-A1- 10 304 933

## Beschreibung

Die Erfindung bezieht sich auf ein bewegliches Dachteil in einem Fahrzeugdach nach dem Oberbegriff des Anspruches 1. Ein solches Dachteil ist aus WO 03/047896 bekannt.

In der DE 101 16 094 C2 wird ein Klappverdeck für ein Fahrzeug beschrieben, das über eine Dachkinematik an die Fahrzeugkarosserie gekoppelt und zwischen einer Schließpositionen und einer Ablageposition zu verstellen ist. Der Dachkinematik ist eine Vorgelegekinematik vorgeschaltet, welche einen Lenker der Dachkinematik in jeder der beiden Endpositionen mit einer in Richtung der jeweils anderen Endposition gerichteten Kraft beaufschlagt, was den Vorteil hat, dass die für das Anheben aus der Endposition erforderlichen Kräfte reduziert sind und das Fahrzeugdach beim Erreichen der gegenüberliegenden Endposition bereits eine Abbremsung erfährt. Der Vorteil, der mit der Vorgelegekinematik erreicht wird, liegt in dem Einsatz kleiner dimensionierter Aktuatoren für die Stellbewegung des Fahrzeugdaches und in der geringeren Bauteilbelastung beim Erreichen der jeweiligen Endposition.

Die Vorgelegekinematik weist einen Kreuzlenker auf, der von einem Aktuator beaufschlagt wird, sowie einen gelenkig mit dem Kreuzlenker verbundenen Antriebshebel, der anderenends gelenkig mit dem Hauptlenker der Dachkinematik gekoppelt ist. Über die spezielle Hebel- und Lenkeranordnung von Vorgelegekinematik und Dachkinematik wird in jeder Endposition ein optimales Hebelverhältnis für eine bestmögliche Umsetzung des antreibenden Drehmoments zur Anhebung des Fahrzeugdaches erreicht. Allerdings ist die Vorgelegekinematik verhältnismäßig aufwändig gestaltet und erfordert außerdem einen erhöhten Platzbedarf.

Der Erfindung liegt die Aufgabe zugrunde, mit einfachen konstruktiven Maßnahmen und geringem Kraftaufwand ein bewegliches Dachteil aus mindestens einer Endlage, zweckmäßig aus beiden Endlagen anzuheben. Dies soll insbesondere auch manuell oder mit klein dimensioniertem Aktuator möglich sein.

Diese Aufgabe wird erfindungsgemäß mit den Merkmalen des Anspruches 1 gelöst. Die Unteransprüche geben zweckmäßige Weiterbildungen an.

Die Vorgelegekinematik des erfindungsgemäßen, beweglichen Dachteils umfasst ein Federelement, das einenends an einem schwenkbar gelagerten Dachlenker der Dachteilkinematik angreift und diesen mit einem um dessen Drehgelenk wirkenden Schwenkmoment beaufschlagt. Anderenends ist das Federelement der Vorgelegekinematik an einem verstellbaren Spannmittel gelagert, bei dessen Betätigung das Federelement unter Vorspannung gesetzt wird. Die Vorspannung des Federelementes erzeugt ein das Dachteil aus der Endlage anhebendes Drehmoment, das gegebenenfalls so groß gewählt wird, dass das Dachteil ohne weiteres Zutun aus der Endlage heraus angehoben wird. Die Energie, welche für die Überführung des Dachteils von einer Endlage in die gegenüberliegende Endlage erforderlich ist, ist in der Vorspannung des Federelementes gespeichert.

Diese Ausführung weist gegenüber dem Stand der Technik verschiedene Vorteile auf. So ist es insbesondere möglich, das Federelement unabhängig von der Dachteilbewegung zu spannen und hierdurch die für die Anhebebewegung erforderliche Energie dem Federelement zuzuführen. Die Bewegung des Dachteils und das Spannen des Federelementes sind grundsätzlich voneinander entkoppelt, so dass der Spannvorgang nach Abschluss der Überführungsbewegung nach Erreichen der Endlage bzw. zwischen zwei Dachbetätigungen erfolgen kann. Da der Spannvorgang somit bei feststehendem Dach und nicht während der Dachbewegung erfolgt, ist dieser Vorgang nicht zeitkritisch und kann dementsprechend mit klein dimensionierten Aktuatoren oder gegebenenfalls auch durch manuelle Betätigung des Spannmittels erfolgen. Der Platzbedarf ist insgesamt reduziert, da kleinere Aktuatoren eingesetzt werden können. Eine weitere Vereinfachung wird dadurch erreicht, dass auch konstruktiv einfach aufgebaute und dementsprechend kostengünstige Aktuatoren eingesetzt werden können, da die Dauer des Spannvorganges nur eine untergeordnete Rolle spielt. Beispielsweise kann ein klein dimensionierter Motor mit hoher Spindelübersetzung gewählt werden, wobei zusätzlich eine Umsetzkinematik eingesetzt werden kann.

In bevorzugter Ausführung wird mit ein und demselben Federelement in beiden Endlagen - also sowohl in Schließposition als auch in Ablageposition des Dachteils - eine Anhebung des Dachteils in Richtung der jeweils anderen Endposition ermöglicht. Voraussetzung hierfür ist, dass sich in einer Zwischenstellung des Dachteiles, bei der es sich insbesondere um die Scheitelposition des Dachteiles handelt, die Wirkrichtung des Federelementes auf die Dachteilkinematik umkehrt. Im Falle eines linearen, translatorisch wirkenden Federelementes wird dies dadurch erreicht, dass die Wirklinie des Federelementes die Position des Drehgelenkes durchwandert, über das der Dachlenker schwenkbar gelagert ist, an welchem das Federelement mit Abstand zum betreffenden Drehgelenk angreift. Um diese Wanderungsbewegung der Wirklinie des Federelementes zu erreichen, sitzt der Fußpunkt des Federelementes mit Abstand zum Drehgelenk des Dachlenkers, wobei während der Drehbewegung des Dachlenkers die sich zwischen Fußpunkt und Angriffspunkt des Federelementes am Dachlenker erstreckende Wirklinie automatisch über die Drehachse hinwegwandert, wodurch sich die Wirkrichtung des Federelementes umkehrt. Der Fußpunkt des Federelementes verbleibt während der gesamten Überführungsbewegung aufgrund der Halterung am Spannmittel in konstanter Position und wird erst nach Abschluss er Überführungsbewegung durch die Betätigung des Spannmittels verstellt.

Nach dem Erreichen der gegenüberliegenden Endposition wird der Fußpunkt über eine Betätigung des Spannmittels - manuell oder motorisch - verstellt, wobei diese Verstellbewegung des Fußpunktes mit einem Spannen des Federelementes einhergeht. Die Federkraft kann auch über eine längere Zeitdauer aufrechterhalten werden, da über das Spannmittel eine mechanische Blockade des Federelements gegeben ist. Sobald die Verriegelungsmechanismen, welche das Dachteil in der jeweiligen Endposition sichern, gelöst werden, beginnt das Dachteil aufgrund der Wirkung des gespannten Federelementes seine Überführungsbewegung in Richtung der jeweils anderen Endlage.

Aufgrund der Umkehrung der Wirkrichtung des Federelementes in einer Zwischenposition des Dachteiles während der Überführungsbewegung erfolgt die Annäherungsbewegung des Dachteiles in die gegenüberliegende Endposition entgegen der Federkraftwirkung, wodurch eine Abbremsung der Dachteilbewegung bei Annäherung an die Zielendlage erreicht wird. Diese Bremskraft ist jedoch aufgrund des schlechter werdenden Hebelverhältnisses geringer als die Anhebekraft zu Beginn der Überführungsbewegung. Mit dem erneuten Spannen bei Erreichen der Zielendlage wird aber wieder ein besseres Hebelverhältnis eingestellt und die Feder gespannt, so dass das von der Federkraft generierte Drehmoment für die Anhebung aus der erreichten Endlage in die andere Endlage ausreicht.

In einer konstruktiv besonders einfachen Ausführung ist die Dachteilkinematik als Viergelenkkinematik mit zwei Dachlenkern ausgebildet, die jeweils einenends schwenkbar an der Fahrzeugkarosserie und anderenends schwenkbar am Dachteil gelagert sind. Das Federelement ist zweckmäßig als Druckfeder ausgeführt, die in der Weise angeordnet ist, dass die Druckkraft zu einer Anhebung des Dachteils aus der jeweiligen Endlage führt. Grundsätzlich kommen aber auch Ausführungen als Zugfeder oder gegebenenfalls auch als Torsionsfeder in Betracht.

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Ansicht auf ein verstellbares Fahrzeugdach, dargestellt in Schließposition, aus der die Dachteile des Fahrzeugdaches in eine heckseitige Ablageposition überführbar sind,
- Fig. 2: eine schematische Darstellung eines verstellbaren Dachteiles des Fahrzeugdaches in der Schließposition, mit einer als Viergelenkkinematik ausgeführten Dachteilkinematik, der eine Vorgelegekinematik mit einem gespannten Federelement vorgeschaltet ist,
- Fig.3: das Dachteil in einer Zwischenphase während der Überführungsbewegung von Schließ- in die Ablageposition, wobei in der dargestellten Situation die Wirklinie des Federelementes der Vorgelegekinematik die Position des Drehgelenkes eines Dachlenkers bereits überschritten hat,
- Fig. 4: das Dachteil in der Ablageposition,
- Fig. 5: das Dachteil in der Ablageposition, jedoch mit betätigtem Spannlenker zum Spannen des Federelementes,
- Fig. 6: das Dachteil in einer Zwischenposition während der Überführungsbewegung von der Ablage- in die Schließposition,
- Fig. 7: das Dachteil mit Erreichen der Schließposition.

In den Figuren sind gleiche Bauteile mit gleichen Bezugszeichen versehen.

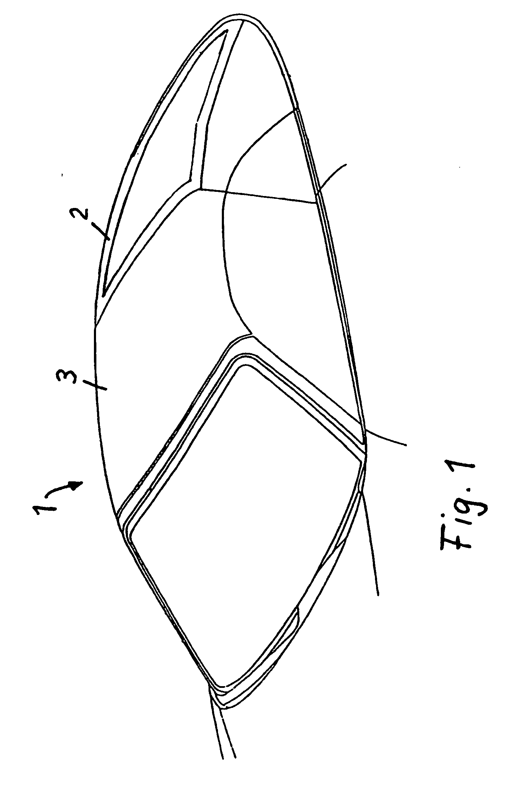

Bei dem in Fig. 1 dargestellten Fahrzeugdach 1 handelt es sich um ein zweiteiliges Hardtop mit einem vorderen Dachteil 3 und einem hinteren Dachteil 2, in welches eine Heckscheibe integriert ist. In der gezeigten Schließposition erstreckt sich das Fahrzeugdach 1 zwischen dem Windschutzscheibenrahmen und einem Heckdeckel, welcher den Ablagekasten überdeckt, in den das Fahrzeugdach in der Ablageposition verstaut ist. Das Fahrzeugdach 1 wird mithilfe einer Dachkinematik betätigt, die den jeweiligen Dachteilen zugeordnete Dachteilkinematiken umfasst und eine kinematisch eindeutig festgelegte Überführungsbewegung zwischen den Endlagen, also zwischen Schließ- und Ablageposition gewährleistet.

Im Rahmen der Erfindung kommt auch ein Einsatz in einem Softtop in Betracht, das einen Verdeckbezugsstoff auf einem verstellbaren Verdeckgestänge umfasst.

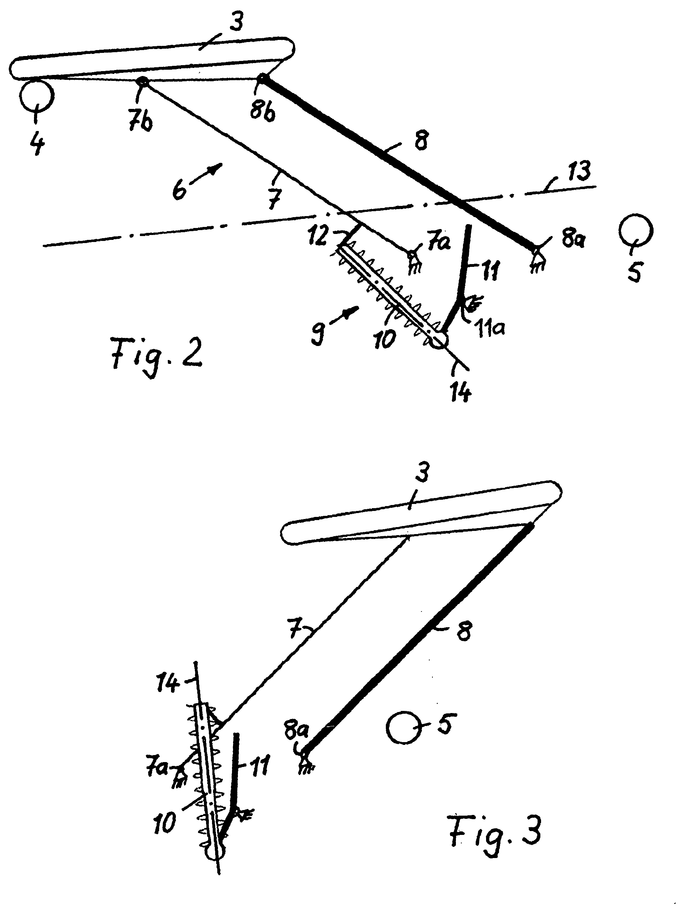

In den Figuren 2 bis 7 wird die Erfindung anhand des vorderen Dachteiles 3 des Fahrzeugdaches dargestellt. In Fig. 2, in der das Dachteil 3 in der Schließposition dargestellt ist, sind die Endpositionen des Fahrzeugdaches mit den symbolisch dargestellten Endanschlägen 4 und 5 dargestellt, wobei der Endanschlag 4 die Schließlage und der Endanschlag 5 die Ablageposition kennzeichnet. Das Dachteil 3 ist über eine Dachteilkinematik 6 an die Fahrzeugkarosserie 13 gekoppelt, wobei die Dachteilkinematik 6 als Viergelenkkinematik mit zwei Dachlenkern 7 und 8 ausgeführt ist, die einenends über Drehgelenke 7a und 8a schwenkbar an die Fahrzeugkarosserie und anderenends über weitere Drehgelenke 7b und 8b schwenkbar mit dem hinteren Dachteil 3 verbunden sind.

Der Dachteilkinematik 6 ist eine Vorgelegekinematik 9 zugeordnet, die ein Federelement 10 und ein als Spannhebel 11 ausgeführtes Spannmittel umfasst. Diese Vorgelegekinematik 9 wirkt auf den Dachlenker 7 der Dachteilkinematik 6. Hierfür ist fest am Dachlenker 7 ein Fortsatz 12 angeordnet, an dem das Federmittel 10 angreift. Der gegenüberliegende Fußpunkt des Federelementes 10 ist schwenkbar mit dem Spannhebel 11 gekoppelt, der über ein Drehgelenk 11a drehbar an die Fahrzeugkarosserie angebunden ist.

Das Federelement 10 ist zweckmäßig als Druckfeder ausgeführt und befindet sich in der Schließposition nach Fig. 2 in seiner vorgespannten Lage, in der das Federelement eine hohe Druckkraft zwischen seinem Fußpunkt und dem Angriffspunkt am Fortsatz 12 am Dachlenker 7 ausübt. Da die Wirklinie 14 des Federelementes 10, die durch den Angriffspunkt am Dachlenker 7 und den Fußpunkt geht, auf Abstand zum karosserieseitigen Drehgelenk 7a des Dachlenkers 7 liegt, erzeugt die Druckkraft des Federelementes ein wirksames, in Fig. 2 im Uhrzeigersinn wirkendes Drehmoment um die Achse des Drehgelenkes 7a. Dieses Drehmoment ist bestrebt, das Dachteil 3 aus der gezeigten Schließposition heraus anzuheben und in Richtung Ablageposition zu überführen. Zweckmäßig ist die Vorspannkraft in dem Federelement so hoch gewählt, dass nach dem Entriegeln das Dachteil 3 automatisch und gegen das Eigengewicht das Dachteils allein unter der Wirkung des Federelementes in die gegenüberliegende Endposition überführt wird.

In Fig. 3 ist das Dachteil 3 in einer Zwischenposition während der Überführungsposition von der Schließ- in die Ablageposition dargestellt. Wie einem Vergleich der Figuren 2 und 3 zu entnehmen, liegt die Wirklinie 14 des Federelementes 10 in der Schließposition nach Fig. 2 diesseits und in der Zwischenposition nach Fig. 3 jenseits des karosserieseitigen Drehgelenkes 7a des Dachlenkers 7. Dies bedeutet, dass in der Position des Dachteiles 3 gemäß Fig. 3 die Wirklinie 14 des Federelementes über die Position des Drehgelenkes 7a hinweggewandert ist, wobei die Position exakt auf dem Drehgelenk zweckmäßigerweise der Scheitelposition bzw. der maximal angehobenen Position des Dachteiles entspricht. Mit dem Überschreiten dieser Scheitelposition drückt die Gewichtskraft das Dachteil 3 in Richtung der Ablageposition, wobei aufgrund des Überschreitens von der Wirklinie über das Drehgelenk 7a hinweg die Wirkrichtung der Federkraft auf das Dachteil umgekehrt wird. Aus einer anfänglichen Beaufschlagung in Richtung der Ablageposition wird nunmehr eine Beaufschlagung entgegen der Ablagebewegung in Richtung der Schließposition, wobei aufgrund des schlechter werdenden Hebelverhältnisses das wirksame, nunmehr in die Schließposition wirkende Drehmoment um das Drehgelenk 7a geringer ist als das in Richtung der Ablageposition wirkende Drehmoment, welches von der Gewichtskraft erzeugt wird, so dass die Ablagebewegung zwar weiter fortgeführt wird, jedoch in abgebremster Weise.

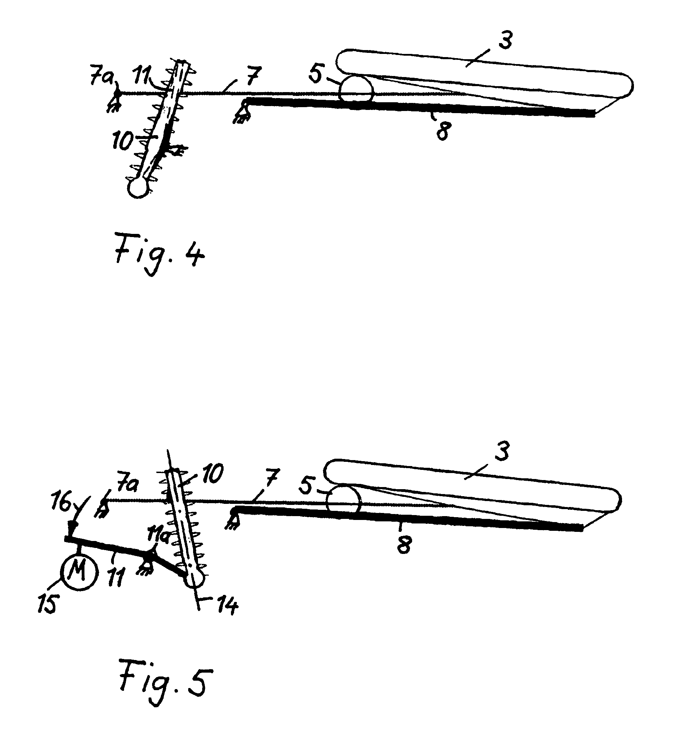

In Fig. 4 hat das Dachteil 3 die Ablageposition erreicht, die mit dem Kreis 5 gekennzeichnet ist. Das Federelement 10 befindet sich in einer teilentspannten Lage, es herrscht nur noch eine verhältnismäßig geringe Vorspannung im Federelement.

Um die Vorspannung im Federelement soweit zu erhöhen, dass eine Überführung des Dachteils 3 allein unter der Wirkung des Federelementes aus der Ablageposition in die Schließposition möglich ist, wird, wie Fig. 5 zu entnehmen, der Spannhebel 11 mithilfe eines Aktuators 15 umgelegt. Während der Ablagebewegung des Daches, dargestellt in Figuren 2 bis 4, befindet sich der Spannhebel 11 in einer in Bezug auf die Fahrzeugkarosserie unveränderten Lage. Durch die Betätigung des Aktuators 15 wird nunmehr in der Ablageposition des Dachteiles der Spannhebel 11 in Pfeilrichtung 16 um sein karosserieseitiges Drehgelenk 11a verschwenkt, wodurch der Fußpunkt des Federelementes 10 verstellt und die Vorspannung im Federelement erheblich erhöht wird. Zugleich wird aufgrund der Verstellung des Fußpunktes die Wirklinie 14 des Federelementes verschoben, und zwar in einer Weise, dass sich das Hebelverhältnis in Bezug auf das wirksame Drehmoment um das karosserieseitige Drehgelenk 7a des Dachlenkers 7 verbessert. Gemeinsam mit der Vorspannung reicht dies aus, um nach dem Lösen der Dachteilarretierung das Dachteil 3 aus der Ablageposition heraus gegen das Eigengewicht anzuheben und in die Schließposition zu überführen.

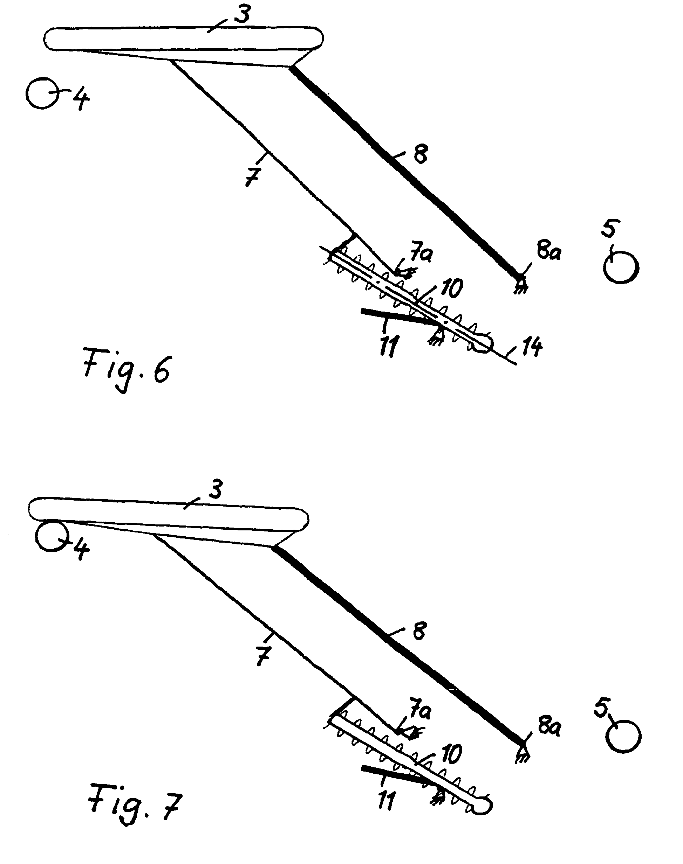

In Fig. 6 ist das Dachteil 3 kurz vor Erreichen der Schließposition dargestellt. Die Wirklinie 14 des Federelementes 10 hat bereits das karosserieseitige Drehgelenk 7a des Dachlenkers 7 durchwandert, so dass die Wirkrichtung umgekehrt ist und das Federelement 10 bei der weiteren Annäherung an die Schließposition nunmehr eine abbremsende Wirkung auf das Dachteil 3 hat.

In Fig. 7 ist die Schließposition erreicht, das Federelement 10 befindet sich in einem teilentspannten Zustand. Während der gesamten Schließbewegung des Dachteiles verbleibt der Spannhebel 11 in Bezug auf die Fahrzeugkarosserie in unveränderter Lage. Um das Federelement wieder zu spannen und auch das Hebelverhältnis zu verbessern, muss der Spannhebel über eine Betätigung des Aktuators wieder um sein karosserieseitiges Drehgelenk verschwenkt werden.

Bei dem Aktuator zur Verstellung des Spannhebels 11 um dessen karosserieseitiges Drehgelenk handelt es sich zweckmäßig um einen Elektromotor. Infrage kommen aber auch beispielsweise hydraulische Stellelemente.

Gegebenenfalls kann auf einen Aktuator auch verzichtet werden; in diesem Fall wird die Vorspannkraft über eine Betätigung des Spannhebels 11 manuell aufgebracht. Außerdem kann der Federfußpunkt in einer weiteren Ausführung auch in einer Kulisse oder in einem Langloch geführt, wobei die Verstellbewegung manuell oder motorisch ausgeführt werden kann; die Kulisse bzw. das Langloch ist zweckmäßig geradlinig ausgeführt, wobei grundsätzlich auch gebogene Ausführungen zur Realisierung beliebiger Kurvenbahnen in Betracht kommen.

Gemäß einer weiteren Ausführung kann ein zusätzlicher, unmittelbar auf die Dachteilkinematik wirkender Aktuator vorgesehen sein, um eine kontrollierte, jederzeit anhaltbare Dachbewegung ausführen zu können. Dieser Aktuator, der auch die Funktion eines aktiven Bremselementes ausübt, ist beispielsweise ein Elektromotor mit selbsthemmendem Getriebe, der jedoch prinzipiell keine Antriebsleistung erbringen muss, sondern lediglich eine Steuerfunktion zum Aufheben der Selbsthemmung erfüllen muss, weil die Antriebsleistung grundsätzlich über das Federelement erbracht wird.

Magna Car Top Systems GmbH 23.04.2007 Bietigheim-Bissingen

### Bezugszeichenliste

- 1: Fahrzeugdach
- 2: hinteres Dachteil
- 3: vorderes Dachteil
- 4: Endanschlag
- 5: Endanschlag
- 6: Dachteilkinematik
- 7: Dachlenker
- 7a, b: Drehgelenk
- 8: Dachlenker
- 8a, b: Drehgelenk
- 9: Vorgelegekinematik
- 10: Federelement
- 11: Spannhebel
- 11a: Drehgelenk
- 12: Fortsatz
- 13: Fahrzeugkarosserie
- 14: Wirklinie
- 15: Aktuator
- 16: Pfeilrichtung

## Patentansprüche

1. Bewegliches Dachteil in einem Fahrzeugdach, mit einer Dachteilkinematik (6), über die das Dachteil (3) an die Fahrzeugkarosserie (13) angebunden und bei deren Betätigung das Dachteil (3) zwischen einer Schließ- und einer Ablageposition verstellbar ist, wobei die Dachteilkinematik (6) einen um ein Drehgelenk (7a) schwenkbar gelagerten Dachlenker (7) umfasst, der von einer die Öffnungs- und Schließbewegung des Daches (1) unterstützenden Vorgelegekinematik (9) beaufschlagt ist, wobei
die Vorgelegekinematik (9) ein Federelement (10) umfasst, das einenends an dem schwenkbar gelagerten Dachlenker (7) angreift und diesen mit einem um dessen Drehgelenk (7a) wirkenden Schwenkmoment beaufschlagt **dadurch gekennzeichnet, dass** das Federelement anderenends an einem verstellbaren Spannmittel (11) gelagert ist, bei dessen Betätigung das Federelement (10) unter Vorspannung zu setzen ist.

2. Dachteil nach Anspruch 1,
**dadurch gekennzeichnet,**
**dass** das Spannmittel (11) unabhängig von der Bewegung der Dachteilkinematik (6) zu verstellen ist.

3. Dachteil nach Anspruch 1 oder 2,
**dadurch gekennzeichnet,**
**dass** das Spannmittel (11) von einem Aktuator (15) zu betätigen ist.

4. Dachteil nach Anspruch 3,
**dadurch gekennzeichnet,**
**dass** der Aktuator (15) ein Elektromotor ist, insbesondere ein Elektromotor mit selbsthemmendem Getriebe.

5. Dachteil nach einem der Ansprüche 1 bis 4,
**dadurch gekennzeichnet,**
**dass** das Spannmittel ein schwenkbar an der Fahrzeugkarosserie (13) gelagerter Spannhebel (11) ist.

6. Dachteil nach einem der Ansprüche 1 bis 5,
**dadurch gekennzeichnet,**
**dass** der Fußpunkt des Federelementes (10) in einer Kulisse oder einem Langloch geführt ist.

7. Dachteil nach einem der Ansprüche 1 bis 6,
**dadurch gekennzeichnet,**
**dass** die Wirklinie (14) des Federelements (10) beim Überführen des Dachteils (3) zwischen Schließ- und Ablagestellung über die Position des Drehgelenks (7a) des Dachlenkers (7) hinwegwandert.

8. Dachteil nach einem der Ansprüche 1 bis 7,
**dadurch gekennzeichnet,**
**dass** die Vorspannung des Federelements (10) die entgegen gesetzten Gewichtskräfte des Dachteils (3) und der Dachteilkinematik (6) übersteigt.

9. Dachteil nach einem der Ansprüche 1 bis 8,
**dadurch gekennzeichnet,**
**dass** die Dachteilkinematik (6) als Viergelenkkinematik ausgebildet ist und zwei Dachlenker (7, 8) umfasst, die einenends schwenkbar an der Fahrzeugkarosserie (13) und anderenends schwenkbar am Dachteil (3) gelagert sind.

10. Dachteil nach einem der Ansprüche 1 bis 9,
**dadurch gekennzeichnet,**
**dass** das Federelement (10) als Druckfeder ausgebildet ist.

11. Dachteil nach einem der Ansprüche 1 bis 9,
**dadurch gekennzeichnet,**
**dass** das Federelement (10) als Zugfeder ausgebildet ist.

12. Dachteil nach einem der Ansprüche 1 bis 9,
**dadurch gekennzeichnet,**
**dass** das Federelement (10) als Torsionsfeder ausgebildet ist.

## Claims

1. Movable roof part in the roof of a vehicle, with a roof-part kinematic system (6) via which the roof part (3) is connected to the vehicle body (13) and upon the actuation of which the roof part (3) is displaceable between a closed position and a storage position, wherein the roof-part kinematic system (6) comprises a roof link (7) which is mounted pivotably about a rotary joint (7a) and is acted upon by a transmission kinematic system (9) which assists the opening and closing movement of the roof (1), wherein the transmission kinematic system (9) comprises a spring element (10) which at one end engages on the pivotably mounted roof link (7) and acts upon the latter with a pivoting torque which is effective about the rotary joint (7a) thereof, **characterized in that** the spring element is mounted at the other end on an adjustable tensioning means (11), upon the actuation of which the spring element (10) can be pretensioned.

2. Roof part according to Claim 1, **characterized in that** the tensioning means (11) can be adjusted independently of the movement of the roof-part kinematic system (6).

3. Roof part according to Claim 1 or 2, **characterized in that** the tensioning means (11) can be actuated by an actuator (15).

4. Roof part according to Claim 3, **characterized in that** the actuator (15) is an electric motor, in particular an electric motor with a self-locking gear.

5. Roof part according to one of Claims 1 to 4, **characterized in that** the tensioning means is a tensioning lever (11) mounted pivotably on the vehicle body (13).

6. Roof part according to one of Claims 1 to 5, **characterized in that** the base of the spring element (10) is guided in a guide slot or an elongated hole.

7. Roof part according to one of Claims 1 to 6, **characterized in that** the line of action (14) of the spring element (10) migrates beyond the position of the rotary joint (7a) of the roof link (7) during the transfer of the roof part (3) between the closed position and storage position.

8. Roof part according to one of Claims 1 to 7, **characterized in that** the pretensioning of the spring element (10) exceeds the opposed weights of the roof part (3) and of the roof-part kinematic system (6).

9. Roof part according to one of Claims 1 to 8, **characterized in that** the roof-part kinematic system (6) is designed as a four-bar linkage kinematic system and comprises two roof links (7, 8) which at one end are mounted pivotably on the vehicle body (13) and at the other end are mounted pivotably on the roof part (3).

10. Roof part according to one of Claims 1 to 9, **characterized in that** the spring element (10) is designed as a compression spring.

11. Roof part according to one of Claims 1 to 9, **characterized in that** the spring element (10) is designed as a tension spring.

12. Roof part according to one of Claims 1 to 9, **characterized in that** the spring element (10) is designed as a torsion spring.

## Revendications

1. Partie de toit mobile dans un toit de véhicule, comprenant une cinématique de partie de toit (6), par le biais de laquelle la partie de toit (3) est raccordée à la carrosserie du véhicule (13) et lors de l'actionnement de laquelle la partie de toit (3) peut être déplacée entre une position de fermeture et une position de rangement, la cinématique de partie de toit (6) comprenant un bras oscillant de toit (7) monté de manière à pouvoir pivoter autour d'une articulation pivotante (7a), lequel est sollicité par une cinématique intermédiaire (9) favorisant le mouvement d'ouverture et de fermeture du toit (1), la cinématique intermédiaire (9) comprenant un élément de ressort (10) qui vient en prise à une extrémité avec le bras oscillant de toit (7) monté de manière pivotante et qui sollicite ce dernier avec un couple de pivotement agissant autour de son articulation pivotante (7a), **caractérisée en ce que** l'élément de ressort est monté à son autre extrémité sur un moyen de serrage réglable (11) dont l'actionnement permet de précontraindre l'élément de ressort (10).

2. Partie de toit selon la revendication 1, **caractérisée en ce que**
le moyen de serrage (11) peut être réglé indépendamment du mouvement de la cinématique de partie de toit (6).

3. Partie de toit selon la revendication 1 ou 2,
**caractérisée en ce que**
le moyen de serrage (11) peut être actionné par un actionneur (15).

4. Partie de toit selon la revendication 3,
**caractérisée en ce que**
l'actionneur (15) est un moteur électrique, en particulier un moteur électrique avec une transmission autobloquante.

5. Partie de toit selon l'une quelconque des revendications 1 à 4,
**caractérisée en ce que**
le moyen de serrage est un levier de serrage (11) monté de manière à pouvoir pivoter sur la carrosserie du véhicule (13).

6. Partie de toit selon l'une quelconque des revendications 1 à 5,
**caractérisée en ce que**
le point de base de l'élément de ressort (10) est guidé dans une coulisse ou un trou oblong.

7. Partie de toit selon l'une quelconque des revendications 1 à 6,
**caractérisée en ce que**
la ligne d'action (14) de l'élément de ressort (10) lors du passage de la partie de toit (3) entre la position de fermeture et la position de rangement, migre au-delà de la position de l'articulation pivotante (7a) du bras oscillant de toit (7).

8. Partie de toit selon l'une quelconque des revendications 1 à 7,
**caractérisée en ce que**
la précontrainte de l'élément de ressort (10) dépasse les forces de pesanteur opposées de la partie de toit (3) et de la cinématique de partie de toit (6).

9. Partie de toit selon l'une quelconque des revendications 1 à 8,
**caractérisée en ce que**
la cinématique de partie de toit (6) est réalisée sous forme de cinématique à quadrilatère articulé, et comprend deux bras oscillants de toit (7, 8), qui sont montés à une extrémité de manière à pouvoir pivoter sur la carrosserie du véhicule (13) et à l'autre extrémité de manière à pouvoir pivoter sur la partie de toit (3).

10. Partie de toit selon l'une quelconque des revendications 1 à 9,
**caractérisée en ce que**
l'élément de ressort (10) est réalisé sous forme de ressort de compression.

11. Partie de toit selon l'une quelconque des revendications 1 à 9,
**caractérisée en ce que**
l'élément de ressort (10) est réalisé sous forme de ressort de traction.

12. Partie de toit selon l'une quelconque des revendications 1 à 9,
**caractérisée en ce que**
l'élément de ressort (10) est réalisé sous forme de ressort de torsion.
